# EUROPÄISCHE PATENTSCHRIFT

(11) **EP 1 649 580 B1**
(45) Veröffentlichungstag und Bekanntmachung des Hinweises auf die Patenterteilung: **16.02.2011**
(21) Anmeldenummer: 04733240.8
(22) Anmeldetag: 15.05.2004
(51) Int. Cl.: H02K 15/12, B05D 1/06

(54) **VERFAHREN ZUM AUFBRINGEN EINER ELEKTRISCHEN ISOLIERUNG**
METHOD FOR APPLYING AN ELECTRICAL INSULATION
PROCEDE D'APPLICATION D'UN ISOLANT ELECTRIQUE

(30) Priorität: 22.07.2003 DE 10333187
(43) Veröffentlichungstag der Anmeldung: 26.04.2006
(73) Patentinhaber: ROBERT BOSCH GMBH, 70442 Stuttgart (DE)
(72) Erfinder: HUEHSAM, Andreas, 76133 Karlsruhe (DE)
(86) Internationale Anmeldenummer: PCT/DE2004/001023
(87) Internationale Veröffentlichungsnummer: WO 2005/011091

(56) Entgegenhaltungen:
- EP-A- 0 891 817
- DE-A- 19 542 863
- DE-A- 19 755 652
- GB-A- 1 046 086
- US-A- 5 618 589
- US-A- 5 922 413
- US-B1- 6 322 629
- PATENT ABSTRACTS OF JAPAN Bd. 1999, Nr. 03, 31. März 1999 (1999-03-31) -& JP 10 314658 A (SANKYO SEIKI MFG CO LTD), 2. Dezember 1998 (1998-12-02)

## Beschreibung

### Stand der Technik

Die Erfindung geht aus von einem Verfahren zum Aufbringen einer elektrischen Isolierung auf einen mit Axialnuten zur Aufnahme einer elektrischen Wicklung versehenen, ferromagnetischen Körper eines Hauptelements einer elektrischen Maschine, insbesondere auf einen genuteten Ankerkörper eines Ankers eines Gleichstrommotors, nach dem Oberbegriff des Anspruchs 1.

Ein Verfahren nach dem Oberbegriff des Anspruchs 1 ist beispielsweise aus der US 6 322 629 B1 bekannt Ein alternatives Verfahren zur elektrostatischen Beschichtung wurde durch die EP 0 891 817 A2 vorgestellt.

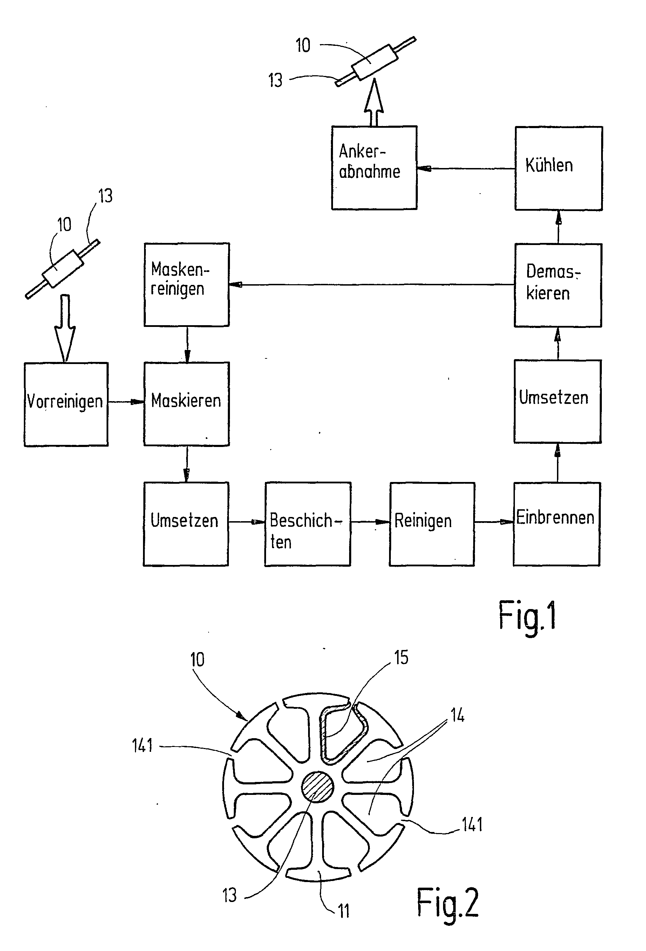

Ein genuteter Ankerkörper eines Ankers eines Gleichstrommotors, wie er beispielhaft in Draufsicht in Fig. 2 dargestellt ist, besteht aus einer Vielzahl von Profillamellen 11, die axial hintereinander gereiht zu einem Lamellenpaket verbunden sind. Der Ankerkörper 10 ist auf eine Ankerwelle 13 aufgepresst. Der Ankerkörper 10 trägt eine Vielzahl von Axialnuten 14, die zu den beiden Stirnseiten des zylindrischen Ankerkörpers 10 hin offen sind und mit einer Nutöffnung 141 in der zylindrischen Oberfläche des Ankerkörpers 10 münden. In die Axialnuten 14 wird eine. Ankerwicklung in Form von Spulen eingewickelt. Die Spulen sind aus einem isolierten Spulendraht, z.B. lackiertem Kupferdraht, gewickelt. Vor Einwickeln der Ankerwicklung werden die Axialnuten 14 und auch die Stirnseiten des Ankerkörpers 10 mit einer elektrischen Isolierung 15, die in Fig. 2 nur für eine Axialnut 14 dargestellt ist, versehen.

Bei den möglichen Verfahren zum Aufbringen einer solchen Isolierung 15 hat sich die Beschichtung des Ankerkörpers 10 mit elektrostatisch aufgeladenem Kunststoffpulver als das wirtschaftlichste Verfahren durchgesetzt, mit dem zusätzlichen Vorteil, dass der Nutquerschnitt durch die Isolierung 15 nur unwesentlich reduziert wird und sich dadurch ein recht großer Nutfüllfaktor für die Ankerwicklung erreichen lässt.

Bei einem bekannten, in Fig. 1 als Ablaufschema dargestellten Verfahren zum Aufbringen der elektrischen Isolierung 15 auf den Ankerkörper 10 mittels elektrostatischer Pulverbeschichtung werden die bereits mit der Ankerwelle 13 verpressten Ankerkörper 10 vorgereinigt, um die bei der Fertigung anfallenden Verunreinigungen zu beseitigen, an den nicht zu beschichtenden Stellen, z.B. der Ankerwelle 13, maskiert und in einem Pulver-Fluidbad mit elektrostatisch aufgeladenem Kunststoffpulver beschichtet. Die Masken übernehmen dabei zusätzlich eine Spannfunktion zum Festlegen der Ankerkörper auf einem das Fluidbad durchlaufenden Transportsystem, wozu die Ankerkörper nach dem Maskieren auf das Transportsystem umgesetzt werden müssen. Der Boden des Fluidbads besteht aus einer porösen Platte, durch die ionisierte, also elektrisch aufgeladene, Druckluft einströmt, die das Pulver gleichmäßig elektrostatisch auflädt und das Pulver fluidisiert, so dass sich letzteres wie eine Flüssigkeit verhält. Die elektrostatisch aufgeladenen Pulverteilchen schlagen sich infolge der Anziehungskraft entgegengesetzter Ladungen auf den durch das Fluidbad geführten Ankerkörper nieder und bleiben daran haften. Die so beschichteten Ankerkörper werden in einem weiteren Verfahrensschritt außerhalb des Fluidbads gereinigt, um auf der zylindrischen Oberfläche der Ankerkörper haftendes Pulver zu entfernen. Anschließend werden die gereinigten Ankerkörper einer Wärmesektion zugeführt, in der durch Wärmeeintrag die Pulverschicht geschmolzen und eingebrannt wird und aushärtet. Die Ankerkörper werden wieder umgesetzt und in einem weiteren Verfahrensschritt demaskiert. Die demaskierten Ankerkörper werden dann in einer Kältezone abgekühlt. Die abgenommenen Masken werden einer Maskenreinigung zugeführt, und mit den gereinigten Masken werden neue, vorgereinigte Ankerkörper maskiert. Die abgekühlten Ankerkörper 10 werden der Bearbeitungsanlage entnommen und einem Wickelautomaten zugeführt.

Dieses Verfahren erbringt eine dünne Isolierschicht von ca. 50 bis 100 µm in den Axialnuten mit guten thermischen und elektrischen Eigenschaften, hat aber auch entscheidende Kostennachteile. So erfordert das Fluidbad eine horizontale Lage der Ankerkörper, die im übrigen Fertigungsprozess meist vertikal bearbeitet werden, so dass mit Verfahrensfortschritt ein mehrmaliges Umsetzen der Ankerkörper durchgeführt werden muss. Weiter ist ein recht aufwendiges Transportsystem zur Förderung der Ankerkörper durch das Fluidbad erforderlich. Bei Schäden am Fluidbad benötigt ein Wechsel des in die Anlage integrierten Fluidbads einen recht hohen Zeitaufwand und führt zu kostenträchtigen Stillstandszeiten der Anlage. Die Masken übernehmen zusätzlich Einspannfunktion der Ankerkörper beim Transport. Bei Verschleiß der Masken kann es zu einem ungenügenden Spannen der Ankerkörper kommen, was zu einer Gefährdung des Prozessablaufs und zu Stillstandszeiten führt.

### Vorteile der Erfindung

Das erfindungsgemäße Verfahren mit den Merkmalen des Anspruchs 1 hat den Vorteil, dass es sehr viel wirtschaftlicher realisiert werden kann als das bekannte Verfahren und dabei eine effektive Pulverbeschichtung mit zuverlässiger Nutisolierung gewährleistet. Die zur Durchführung des Verfahrens erforderlichen Komponenten sind marktübliche Standardkomponenten, wie sie beispielsweise bei Autolackierungen oder anderen Lackierungen für dekorative Oberflächen eingesetzt werden und weltweit verfügbar sind. Diese Standardkomponenten bedürfen einen nur geringen Investitionsaufwand und sind wartungsfreundlich, so dass funktionale Teile schnell ausgetauscht werden können und Stillstandszeiten für Wartung und Reparatur auf ein Minimum reduziert werden. Bei Störungen oder fehlendem Gutdurchsatz kann der Pulverstrom sofort abgestellt und somit der Pulvereinsatz optimiert werden.

Das erfindungsgemäße Verfahren übernimmt damit sämtliche Vorteile der elektrostatischen Pulversprühbeschichtung für dekorative Oberflächen und gewährleistet anders als dieses Verfahren auch eine zuverlässig isolierende Beschichtung der Nutwände mit Kunststoffpulver. Durch die Auftragung einer großen Schichtdicke wird sichergestellt, dass sich auch auf den Nutwänden eine ausreichend dicke Pulverschicht niederschlägt, die in der Regel zwar dünner ist als die Pulverschicht auf der zylindrischen Oberfläche des Körpers, jedoch eine zuverlässige Isolierauskleidung der Nuten bietet. Die aufgetragene große Schichtdicke ist um den Faktor 10 bis 50 mal größer als die Schichtdicken, die bei der Pulverbeschichtung von Dekoroberflächen erreicht werden, und liegt etwa zwischen 1 - 1,5mm. Beim elektrostatischen Pulversprühen stellen die Axialnuten sog. Faradaysche Käfige dar, die feldfrei sind, da die Feldlinien des zwischen der Sprühquelle und dem vorzugsweise geerdeten Körper sich ausbildenden magnetischen Feldes, auf denen sich die elektrisch geladenen Pulverteilchen bewegen, sich an Spitzen und Vorsprüngen konzentrieren und nicht in die Axialnuten eindringen. Durch den sog. elektrostatischen Umgriff, d.h. das Verlaufen der Feldlinien auch zu den Stirnseiten des Ankerkörpers, wird zwar an den Nutenden Pulver elektrostatisch angelagert aber nicht im Nutinnern. Durch das Aufbringen der erfindungsgemäß großen Schichtdicke erfolgt zunächst zwar die Anlagerung von Pulver an Stellen mit hoher Feldlinienkonzentration zu Beginn des Beschichtungsprozesses. Bei weiterer Besprühung tritt jedoch eine Sättigung dieser Stellen ein. Die gesättigten Stellen können nicht weiter beschichtet werden, da hier eine Ladungskonzentration entsteht. Die weiter ankommenden Pulverteilchen tragen dieselbe Ladung und werden aufgrund der elektrostatischen Abstoßung vom Körper weggeschleudert (Rücksprüheffekt). Da die Sprühquelle elektrisch gleich aufgeladen ist, werden die Teilchen jedoch nicht zurückbeschleunigt, vielmehr unterliegen sie keiner äußeren Kraft mehr durch die Feldlinien und dringen in das Innere der Axialnuten ein.

Ein weiterer Vorteil des erfindungsgemäßen Verfahrens besteht in der Verbesserung des Handlings der Körper im Fertigungsprozess, da anders als bei dein ein Fluidbad einsetzenden, bekannten Verfahren die Körper in beliebiger Stellung besprüht werden können und nicht zwangsweise in eine Horizontallage verbracht werden müssen. Das erspart ein Umsetzen der Körper, so dass weitere Hilfsstationen im Verfahrensfluss eingespart werden können.

Durch die in den weiteren Ansprüchen 2 - 9 aufgeführten Maßnahmen sind vorteilhafte Weiterbildungen und Verbesserungen des im Anspruch 1 angegebenen Verfahrens möglich.

### Zeichnung

Die Erfindung ist anhand eines in der Zeichnung dargestellten Ausführungsbeispiels im folgenden näher beschrieben. Es zeigen:
- Fig. 1: ein Schema des Ablaufs eines Verfahrens zum Aufbringen einer Isolierung auf Ankerkörper für elektrische Maschinen gemäß dem Stand der Technik,
- Fig. 2: einen Querschnitt eines auf einer Ankerwelle aufgepressten Ankerkörpers,
- Fig. 3: ein Ablaufschema des erfindungsgemäßen Verfahrens zur Isolierbeschichtung von Ankerkörpern,
- Fig. 4: eine schematische Darstellung eines Transportsystems für den Durchlauf der Ankerkörper im Beschichtungsprozess,
- Fig. 5: ein Blockschaltbild einer Anlage für die elektrostatische Pulversprühbeschichtung,
- Fig. 6: eine schematische Darstellung einer Pulverbeschichtungskammer mit integriertem Pulvervorrat.

### Beschreibung des Ausführungsbeispiels

Das Verfahren zum Aufbringen einer elektrischen Isolierung auf einen mit Axialnuten zur Aufnahme einer elektrischen Wicklung versehenen, ferromagnetischen Körper eines Hauptelements, also eines Stators oder Rotors, einer elektrischen Maschine wird anhand eines genuteten Ankerkörpers 10 eines Ankers eines Gleichstrommotors beschrieben. Der in Fig. 2 in Stirnansicht zu sehende Ankerkörper 10 besteht aus einer Vielzahl von Profillamellen 11, die axial hintereinander zu einem sog. Blechpaket aneinandergereiht und axial miteinander fest verbunden sind. Anstelle eines Profillamellenpakets kann der Ankerkörper 10 auch als Vollzylinder aus weichmagnetischem Verbundwerkstoff, sog. SMC (Soft-Magnetic-Composite)-Material ausgeführt sein. Der Ankerkörper 10 ist in bekannter Weise mit einer Vielzahl von äquidistant über den Körperumfang angeordnete Axialnuten 14 zur Aufnahme einer Ankerwicklung versehen.

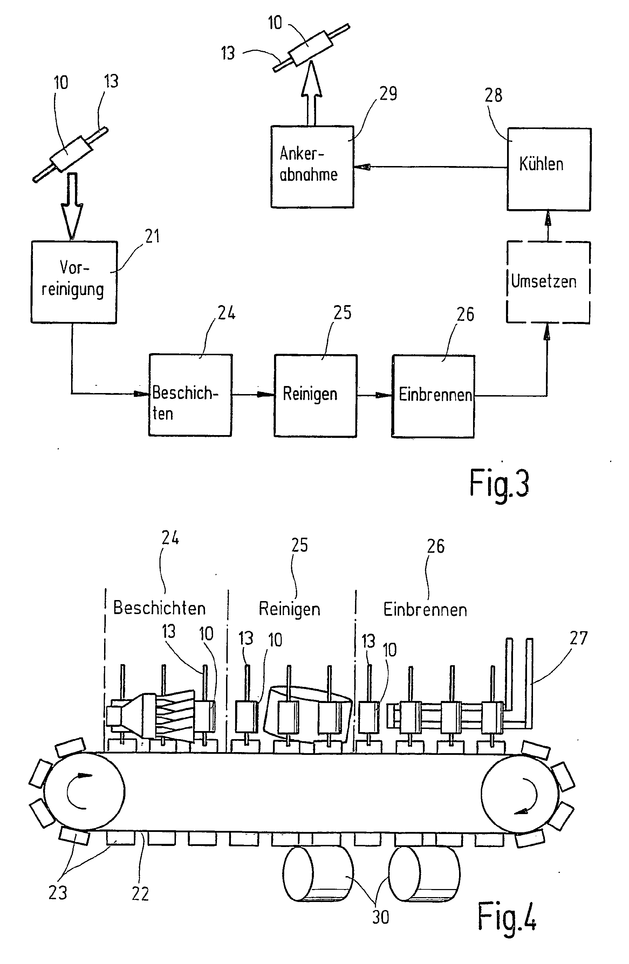

Die auf die Ankerwelle 13 aufgepressten Ankerkörper 10 werden in einer ersten Verfahrensstufe 21 "Vorreinigung" (Fig. 3) vorgereinigt, um Fertigungsreste, wie Stanzabfälle und Kühlmittelreste, zu beseitigen. Die vorgereinigten Ankerkörper 10 werden auf ein Transportband 22 mit die Ankerwelle 13 festlegenden Spannvorrichtungen 23 (Fig. 4) aufgesetzt und mittels des Transportbandes 22 durch drei Verfahrensstufen 24 "Beschichten", 25 "Reinigen" und 26 "Einbrennen" geführt. In der Verfahrensstufen 24 "Beschichten" werden die Ankerkörper 10 mit elektrostatisch aufgeladenem Kunststoffpulver beschichtet. Die Beschichtung wird mit einer Schichtdicke von ca. 1- 2mm, vorzugsweise ca. 1,0 - 1,5mm - wobei fertigungsbedingte Abweichungen eingeschlossen sind - durch direktes Pulversprühen auf den vorzugsweise geerdeten Ankerkörper 10 vorgenommen. Es genügt, wenn der Ankerkörper 10 ein gegenüber dem Kunststoffpulver elektrisch niedrigeres Potenzial hat; am einfachsten ist dies natürlich durch Erden erreichbar. Es ist jedoch auch möglich, dass der Ankerkörper 10 ein höheres Potenzial hat. Wesentlich ist, dass der Ankerkörper 10 gegenüber dem elektrostatisch aufgeladenem Kunststoffpulver eine derartige Potenzialdifferenz aufweist, dass das Kunststoffpulver auf den Ankerköper 10 gelangt.

In der Verfahrensstufe 25 "Reinigen" wird die zylindrische Oberfläche der beschichteten Ankerkörper 10 von der dort haftenden Pulverschicht befreit und in der Verfahrensstufe 26 "Einbrennen" werden die beschichteten Ankerkörper 10 einem Wärmeeintrag ausgesetzt, wodurch die auf jedem Ankerkörper 10 aufgetragene Pulverschicht schmilzt und aushärtet. Die Schichtdicke sinkt dabei auf ca. 1/3 der aufgesprühten Pulverschicht ab. Danach werden die Ankerkörper 10 mittels eines Umsetzwerkzeugs 27 (Fig. 4) vom Transportband 22 abgenommen und in der Verfahrensstufe 28 "Kühlen" abgekühlt. Schließlich werden die mit der Isolierung versehenen Ankerkörper 10 in der Verfahrensstufe 29 "Ankerabnahme" dem Verfahrenskreislauf entnommen und z.B. einem Wickelautomaten zugeführt. Im Rücklaufstrang des Transportbandes 22 werden die Spannvorrichtungen 23 des Transportbandes 22 mittels Reinigungsbürsten 30 von Pulverrückständen gesäubert.

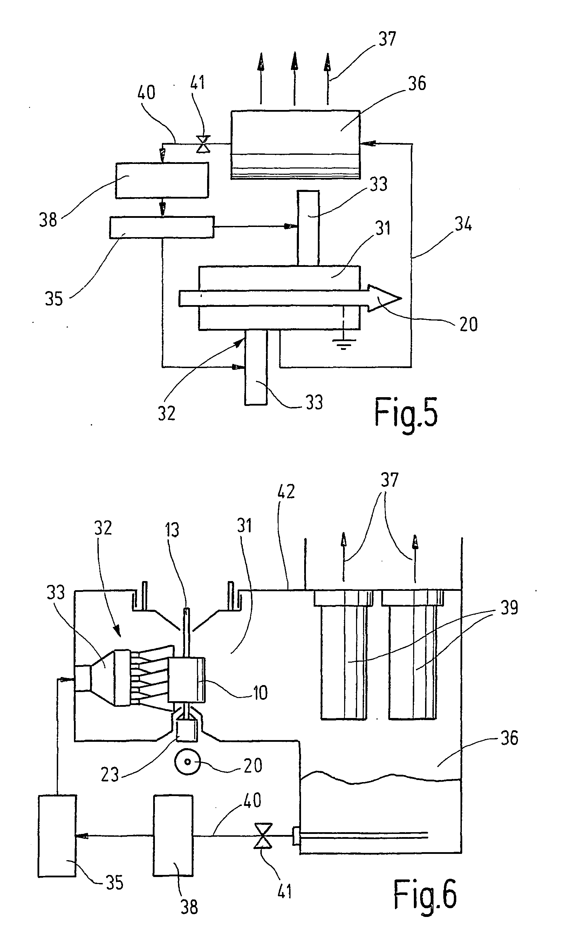

In Fig. 5 sind die zur Durchführung der Verfahrensstufe 24 "Beschichten" erforderlichen Komponenten im Blockschaltbild dargestellt. Das Aufsprühen des elektrostatisch aufgeladenen Kunststoffpulvers auf die geerdeten Ankerkörper 10 erfolgt in einer geschlossenen Sprühkammer 31, durch die das Transportband 22 mit seinem oberen Zuführstrang hindurchläuft. Der Teilefluss, d.h. der Durchgang der Ankerkörper 10 durch die Kammer 31, ist durch den Pfeil 20 gekennzeichnet. Die Erdung der Ankerkörper 10 erfolgt über das Transportband 22 mit Spannvorrichtungen 23, das seinerseits geerdet ist. In der Kammer 31 ist eine Sprühvorrichtung 32 integriert, die über mindestens eine Sprühstelle 33 mittels Druckluft eine dosierte Pulvermenge auf den jeweiligen Ankerkörper 10 aufsprüht. Hierzu ist an jeder Sprühstelle 33 eine sog. Sprüh- oder Coronapistole angeordnet, deren Sprührichtung auf den jeweils vorbeilaufenden Ankerkörper 10 gerichtet ist. Solche Sprühpistolen sind als Standardkomponenten im Markt erhältlich und werden beispielsweise bei der Lackierung von Dekoroberflächen eingesetzt. Die Sprühpistolen sind dabei zur elektrischen Aufladung der Pulverteilchen an ein Spannungspotential von ca. 70 kV angeschlossen. Die pro Ankerkörper 10 aufgesprühte Pulvermenge ist so dosiert, dass auf dem Ankerkörper 10 eine Schichtdicke von vorzugsweise 1,0 - 1,5mm entsteht. Dabei wird ein grobes Kunststoffpulver verwendet, dessen Pulverteilchen einen mittleren Durchmesser größer 150µm aufweisen. Diese schweren Pulverteilchen verbessern die Überwindung des eingangs beschriebenen Faraday-Effeks und führen zu einer verbesserten und vergleichmäßigten Beschichtung der Nutwände der Axialnuten 14 im Ankerkörper 10. Nicht auf die Ankerkörper 10 gelangendes Pulver wird über eine sog. "Overspray"-Leitung 34 einem Pulverbunker 36 zugeführt, in dem die mit Pulverteilchen beladene Druckluft durch Filter hindurchgeführt wird und als Abluft (Pfeil 37) in die Umgebung abströmt. Die von den Filtern zurückgehaltenen Pulverteilchen fallen in einem im Pulverbunker 36 gespeicherten Pulvervorrat zurück.

Die den Sprühpistolen zugeführte Pulvermenge wird von einer Dosiereinrichtung 35 zur Verfügung gestellt, der wiederum Pulver aus dem Pulverbunker 36 mittels einer pneumatischen Pulvertransportvorrichtung 38 zugeführt wird. Die Pulvertransponlvornchtung 38 ist über eine mittels eines Ventils 41 steuerbare Saugleitung 40 an dem Pulverbunker 36 angeschlossen und erzeugt in der Saugleitung 40 einen Unterdruck, durch den bei geöffnetem Ventil 41 Pulver aus dem Pulverbunker 36 abgesaugt wird, das mit Druckluft der Dosiereinrichtung 35 zugeführt wird.

In Fig. 6 ist schematisiert die Zusammenfassung der Sprühkammer 31 mit dem Pulverbunker 36 in einem gemeinsamen Gehäuse 42 als kompakte Integrationslösung einer Beschichtungskammer dargestellt. Der von den Sprühstellen 33 bzw. Sprühpistolen ausgehende, pulverbeladene Luftstrom wird nach Vorbeiströmen an den Ankerkörpern 10 direkt in den Pulverbunker 36 geleitet, in dem die Luft über Filter 39 als Abluft (Pfeil 37) in die Umgebung auszutreten vermag. Die im Filter 39 sich absetzenden Pulverrestmengen fallen auf den in einem vertieften Boden des Pulverbunkers 36 gelagerten Pulvervorrat. Von dort wird Pulver durch die pneumatische Pulvertransportvornchtung 38 abgesaugt und über die Dosiereinrichtung 35 wieder den Sprühstellen 33 zugeführt. Der Übersichtlichkeit halber sind in Fig. 4 zwei Sprühstellen 33 und in Fig. 5 nur eine Sprühstelle 33 dargestellt. Die Zahl der Sprühstellen 33 der Sprühvorrichtung 32 ist jedoch beliebig und wird an die gewünschte Durchsatzgeschwindigkeit der Ankerkörper 10 durch die Kammer 31 angepasst.

## Patentansprüche

1. Verfahren zum Aufbringen einer elektrischen Isolierung auf einen mit Axialnuten (14) zur Aufnahme einer elektrischen Wicklung versehenen, ferromagnetischen Körper (10) eines Hauptelements einer elektrischen Maschine, insbesondere auf einen genuteten Ankerkörper (10) eines Ankers eines Gleichstrommotors, bei dem der Körper (10) mit elektrostatisch aufgeladenem Kunststoffpulver beschichtet wird, **gekennzeichnet durch** folgende Schritte:
a) Die Beschichtung mit großer Schichtdicke wird **durch** direktes elektrostatisches Pulversprühen mit einer Sprühquelle (33) auf den dem Kunststoffpulver gegenüber eine Potenzialdifferenz aufweisenden Körper (10) vorgenommen, wobei die aufzusprühende Schichtdicke mit 1,0 - 2mm, vorzugsweise 1,0 - 1,5mm, vorgegeben wird; wobei das besagte elektrostatische Pulversprühen folgende weitere Verfahrensschritte beinhaltet:
b) Anlagerung von Pulver an Stellen mit hoher Feldlinienkonzentration zu Beginn des Beschichtungsprozesses;
c) Weitere Besprühung, die zur Sättigung der besagten Stellen sowie zur Ladungskonzentration an den besagten Stellen führt;
d) Weitere Besprühung derart, dass weiter ankommende Pulverteilchen, die dieselbe Ladung tragen, wie die Teilchen, die zuvor in den Schritten b) und c) versprüht wurden, aufgrund der elektrostatischen Abstoßung vom Körper (10) weggeschleudert werden;
e) Weiteres Besprühen mit besagter Sprühquelle (33), die elektrisch gleich aufgeladen ist wie die Pulverteilchen, die in den Schritten b) bis d) versprüht wurden, was zur Folge hat, dass die im Schritt d) vom Körper (10) weg geschleuderten Teilchen nicht in Richtung der Sprühquelle (33) zurück beschleunigt werden, sondern keiner äußeren Kraft mehr **durch** die Feldlinien unterliegen und somit in das Innere der Axialnuten (14) eindringen, wo sie sich dann anlagern;
f) Fortsetzen des Berührens, bis die aufzusprühende Schichtdicke erreicht ist.

2. Verfahren nach Anspruch 1, **dadurch gekennzeichnet, dass** die Beschichtung auf den dem gegenüber dem Kunststoffpulver ein niedrigeres Potenzial aufweisenden, vorzugsweise geerdeten Körper (10) vorgenommen wird.

3. Verfahren nach Anspruch 1 oder 2, **dadurch gekennzeichnet, dass** zum Pulversprühen ein grobes Kunststoffpulver verwendet wird, dessen Pulverteilchen einen mittleren Durchmesser größer als 150µm aufweisen.

4. Verfahren nach einem der Ansprüche 1 - 3, **dadurch gekennzeichnet, dass** das elektrostatische Pulversprühen mit Druckluft durchgeführt wird.

5. Verfahren nach einem der Ansprüche 1 - 4, **dadurch gekennzeichnet, dass** das elektrostatische Pulversprühen in einer geschlossenen Sprühkammer (31) mit einer an einem Hochspannungspotential angeschlossenen Sprühvorrichtung (32) durchgeführt wird, die mit mindestens einer auf den Körper (10) gerichteten Sprühstelle (33) ausgestattet ist.

6. Verfahren nach Anspruch 5, **dadurch gekennzeichnet, dass** das Kunststoffpulver einem Pulvervorrat mittels Saugluft entnommen und eine dosierte Pulvermenge mittels Druckluft der Sprühvorrichtung (32) zugeführt wird.

7. Verfahren nach einem der Ansprüche 1- 6, **dadurch gekennzeichnet, dass** der Körper (10) nach der elektrostatischen Pulversprühbeschichtung einem Reinigungsprozess zum Entfernen von auf der Körperoberfläche haftenden Pulver unterzogen wird.

8. Verfahren nach Anspruch 7, **dadurch gekennzeichnet, dass** der beschichtete und gereinigte Körper (10) einen das Einbrennen der Pulverbeschichtung bewirkenden Wärmeprozess unterzogen wird.

9. Verfahren nach Anspruch 8, **dadurch gekennzeichnet, dass** der Körper (10) nach dem Einbrennen gekühlt wird.

## Claims

1. Method for applying an electrical insulation to a ferromagnetic body (10) of a main element of an electrical machine that is provided with axial slots (14) for receiving an electrical winding, in particular to a slotted armature body (10) of an armature of a d.c. motor, in which the body (10) is coated with electrostatically charged polymer powder, **characterized by** the following steps:
a) the coating with great layer thickness is performed by direct electrostatic powder spraying with a spray source (33) onto the body (10) having a potential difference with respect to the polymer powder, the layer thickness to be sprayed on being prescribed as 1.0 - 2 mm, preferably 1.0 - 1.5 mm; wherein said electrostatic powder spraying comprises the following further method steps:
b) accumulation of powder at points where there is a high concentration of field lines at the beginning of the coating process;
c) further spraying, which leads to saturation of said points and to a concentration of the charge at said points;
d) further spraying in such a way that any further incoming powder particles that bear the same charge as the particles which have previously been sprayed in steps b) and c) are flung away from the body (10) as a result of the electrostatic repulsion;
e) further spraying with said spray source (33), which has the same electrical charge as the powder particles that were sprayed in steps b) to d), which has the consequence that the particles flung away from the body (10) in step d) are not accelerated back in the direction of the spray source (33) but instead are no longer subjected to any external force by the field lines and consequently penetrate into the interior of the axial slots (14), where they then accumulate;
f) continuation of spraying until the layer thickness to be sprayed on is achieved.

2. Method according to Claim 1, **characterized in that** the coating is performed onto the body (10) at a lower potential in comparison with the polymer powder, the body preferably being earthed.

3. Method according to Claim 1 or 2, **characterized in that** a coarse polymer powder, the powder particles of which have an average diameter greater than 150 µm, is used for the powder spraying.

4. Method according to one of Claims 1 to 3, **characterized in that** the electrostatic powder spraying is carried out with compressed air.

5. Method according to one of Claims 1 to 4, **characterized in that** the electrostatic powder spraying is carried out in a closed spraying chamber (31) with a spraying device (32) which is connected to a high-voltage potential and is equipped with at least one spraying location (33) directed onto the body (10).

6. Method according to Claim 5, **characterized in that** the polymer powder is taken from a powder supply by means of suction air and a metered amount of powder is fed to the spraying device (32) by means of compressed air.

7. Method according to one of Claims 1 to 6, **characterized in that**, after the electrostatic powder spray coating, the body (10) is subjected to a cleaning process to remove powder adhering to the surface of the body.

8. Method according to Claim 7, **characterized in that** the coated and cleaned body (10) is subjected to a heating process with the effect of firing the powder coating.

9. Method according to Claim 8, **characterized in that** the body (10) is cooled after the firing.

## Revendications

1. Procédé d'application d'une isolation électrique sur un corps ferromagnétique (10), doté de rainures axiales (14) qui reprennent un enroulement électrique, d'un élément principal d'une machine électrique, en particulier sur un corps d'induit (10) rainuré de l'induit d'un moteur à courant continu, dans lequel le corps (10) est revêtu d'une poudre de matière synthétique chargée électrostatiquement, le procédé étant **caractérisé par** les étapes suivantes :
a) le revêtement est réalisé en couche de grande épaisseur par pulvérisation électrostatique directe de poudre, à l'aide d'une source de pulvérisation (33), sur le corps (10) qui présente une différence de potentiel par rapport à la poudre de matière synthétique, l'épaisseur de la couche pulvérisée étant prédéterminée à une valeur de 1,0 à 2 mm et de préférence de 1,0 à 1,5 mm, ladite pulvérisation électrostatique comprenant les autres étapes de traitement suivantes :
b) dépôt de poudre en des emplacements qui présentent une haute concentration de lignes de champs au début de l'opération de revêtement,
c) poursuite de la pulvérisation qui conduit à la saturation desdits emplacements ainsi qu'à une concentration de charges auxdits emplacements,
d) poursuite de la pulvérisation de telle sorte que des particules de poudre supplémentaires portant la même charge que les particules qui ont été pulvérisées précédemment au cours des étapes b) et c) soient repoussées du corps (10) par répulsion électrostatique,
e) à l'aide de ladite source de pulvérisation (33), poursuite de la pulvérisation de particules qui portent une charge électrique identique à celle des particules de poudre qui ont été pulvérisées au cours des étapes b) à d), ce qui a pour conséquence que les particules repoussées à l'étape d) du corps (10) ne sont pas accélérées en direction de la source de pulvérisation (33) et que les lignes de champ n'exercent plus de force extérieure sur elles, pour qu'elles pénètrent ainsi à l'intérieur des rainures axiales (14) où elles s'accumulent,
f) poursuite de la pulvérisation jusqu'à obtention de l'épaisseur de la couche à pulvériser.

2. Procédé selon la revendication 1, **caractérisé en ce que** le revêtement est réalisé sur un corps (10) qui présente un potentiel plus bas que la poudre de matière synthétique et qui est de préférence raccordé à la terre.

3. Procédé selon la revendication 1 ou 2, **caractérisé en ce que** l'on utilise pour la pulvérisation une poudre grossière de matière synthétique dont les particules ont un diamètre moyen supérieur à 150 µm.

4. Procédé selon l'une des revendications 1 à 3, **caractérisé en ce que** la pulvérisation électrostatique de poudre est réalisée à l'aide d'air comprimé.

5. Procédé selon l'une des revendications 1 à 4, **caractérisé en ce que** la pulvérisation électrostatique de poudre est conduite dans une chambre fermée de pulvérisation (31) à l'aide d'un dispositif de pulvérisation (32) raccordé à un potentiel de tension élevé, le dispositif de pulvérisation étant doté d'au moins un emplacement de pulvérisation (33) orienté vers le corps (10).

6. Procédé selon la revendication 5, **caractérisé en ce que** la poudre de matière synthétique est prélevée par aspiration d'air dans une réserve de poudre et **en ce qu'**un débit dosé de poudre est apporté au dispositif de pulvérisation (32) au moyen d'air comprimé.

7. Procédé selon l'une des revendications 1 à 6, **caractérisé en ce qu'**après son revêtement par pulvérisation électrostatique de poudre, le corps (10) subit une opération de nettoyage qui enlève la poudre qui adhère à la surface du corps.

8. Procédé selon la revendication 7, **caractérisé en ce que** le corps (10) revêtu et nettoyé subit un traitement thermique qui a pour effet une cuisson du revêtement de poudre.

9. Procédé selon la revendication 8, **caractérisé en ce qu'**après la cuisson, le corps (10) est refroidi.
